(19) Europäisches Patentamt
European Patent Office
Office européen des brevets

(11) **EP 3 603 869 A1**

(12) **EUROPEAN PATENT APPLICATION**
published in accordance with Art. 153(4) EPC

(43) Date of publication:
**05.02.2020 Bulletin 2020/06**

(51) Int Cl.:
**B23K 11/16** (2006.01)          **B23K 11/06** (2006.01)
**B23K 11/34** (2006.01)          **B23K 31/00** (2006.01)

(21) Application number: **18774309.1**

(22) Date of filing: **20.03.2018**

(86) International application number:
**PCT/JP2018/011166**

(87) International publication number:
**WO 2018/180810 (04.10.2018 Gazette 2018/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.03.2017 JP 2017067989**

(71) Applicant: **Nippon Steel Corporation
Tokyo 100-8071 (JP)**

(72) Inventors:
• **ZENIYA, Tasuku
Tokyo 100-8071 (JP)**
• **YASUYAMA, Masanori
Tokyo 100-8071 (JP)**
• **NAKAZAWA, Yoshiaki
Tokyo 100-8071 (JP)**

(74) Representative: **Vossius & Partner
Patentanwälte Rechtsanwälte mbB
Siebertstrasse 3
81675 München (DE)**

(54) **WELDED JOINT MANUFACTURING METHOD, AND WELDED JOINT**

(57) A weld joint manufacturing method of the present disclosure includes performing current-passing through an aluminum-plated steel sheet provided with an aluminum plating layer while moving a pair of wheel electrodes relative to the aluminum-plated steel sheet by sandwiching the aluminum-plated steel sheet between the pair of wheel electrodes and rotating the pair of wheel electrodes in a circumferential direction; and welding a part of the aluminum-plated steel sheet, where the current-passing has been performed, and another steel sheet, in an overlapped state of the aluminum plating layer with the other steel sheet.

## FIG.2A

## FIG.2B

**Description**

Technical Field

The present disclosure relates to a weld joint manufacturing method and a weld joint.

Background Art

Technology is known in which, for example, plural steel sheets having different sheet thicknesses and compositions etc. from each other are joined by laser welding to produce a single tailored blank (see, for example, Japanese Patent Application Laid-Open (JP-A) No. 2002-144066).

SUMMARY OF INVENTION

When plural steel sheets are laser welded using the technology described above, if the plural steel sheets include an aluminum-plated steel sheet, the aluminum content of the weld portion becomes greater than that of the composition of the steel sheet component. If the weld portion has a high aluminum content then the quenchability of the weld portion deteriorates. Accordingly, in cases in which a laser welded member including an aluminum-plated steel sheet has been quenched, an issue exists in that a difference in mechanical properties arises between the weld portion and other parts, and there is an issue in that a member with uniform mechanical properties cannot be obtained. This issue is not limited to the manufacture of tailored blanks, and also arises in cases in which plural steel sheets including an aluminum-plated steel sheet are welded and subjected to heat treatment such as quenching. This issue becomes particularly significant in cases in which the aluminum content of the weld portion is 1.0 mass % or greater.

An object of the present disclosure is to provide a weld joint manufacturing method capable of obtaining a weld joint with low aluminum content at a weld portion, and to provide a weld joint with a low aluminum content (less than 1.0 mass %) in the weld portion for cases in which plural steel sheets including an aluminum-plated steel sheet are welded together.

A summary of the present disclosure is as set out below.

[1] A weld joint manufacturing method, including:

performing current-passing through an aluminum-plated steel sheet provided with an aluminum plating layer while moving a pair of wheel electrodes relative to the aluminum-plated steel sheet by sandwiching the aluminum-plated steel sheet between the pair of wheel electrodes and rotating the pair of wheel electrodes in a circumferential direction; and

welding a part of the aluminum-plated steel sheet, where the current-passing has been performed, and another steel sheet, in an overlapped state of the aluminum plating layer with the other steel sheet.

Advantageous Effects

In this manufacturing method, first, current-passing through an aluminum-plated steel sheet provided with an aluminum plating layer is performed while moving the pair of wheel electrodes relative to the aluminum-plated steel sheet by sandwiching the aluminum-plated steel sheet between the pair of wheel electrodes and rotating the pair of wheel electrodes in a circumferential direction. As a result, part of the aluminum plating layer is removed at a part of the aluminum-plated steel sheet through where the current-passing has been performed.

Then, in an overlapped state of the aluminum plating layer with the other steel sheet, the part of the aluminum-plated steel sheet, where the current-passing has been performed (namely, the part at which part of the aluminum plating layer has been removed) is welded to the other steel sheet. As a result, the aluminum content of the weld portion at the weld joint obtained by welding is lower than would be the case if welded without the current-passing.

Note that current-passing through the aluminum-plated steel sheet may be performed by sandwiching only the aluminum-plated steel sheet between the pair of wheel electrodes and by only adopting an overlapped state of the aluminum-plated steel sheet and the other steel sheet at the stage when welding is performed, or an overlapped state of the aluminum-plated steel sheet and the other steel sheet may be adopted from a prior stage when current-passing is performed.

[2] The weld joint manufacturing method of [1], wherein:

the current-passing is performed in an overlapped state of plural of steel sheets including the aluminum-plated steel sheet and the other steel sheet; and
the welding is performed by welding while retaining the overlapped state of the plural of steel sheets without shifting from the state during the current-passing.

[3] The weld joint manufacturing method of [2], wherein a nugget is not generated during the current-passing.
[4] The weld joint manufacturing method of any one of [1] to [3], wherein the welding includeds seam welding.
[5] The weld joint manufacturing method of any one of [1] to [4], wherein a carbon content of steel in the aluminum-plated steel sheet is at least 0.15 mass %.
[6] A quenched member manufacturing method including quenching a weld portion of a weld joint manufactured by the weld joint manufacturing method of any one of [1] to [5].
[7] A weld joint including:

an aluminum-plated steel sheet provided with an aluminum plating layer;
another steel sheet that is overlapped with the aluminum plating layer; and
a nugget connecting the aluminum-plated steel sheet and the other steel sheet together,
an aluminum content per unit area of the nugget as viewed along a direction perpendicular to the aluminum-plated steel sheet being less than 75% of an aluminum content per unit area of all the aluminum plating layers on a side at which faces of the aluminum-plated steel sheet and the other steel sheet are superimposed;
an aluminum content of the nugget being less than 1.0 mass %;
a carbon content of the nugget being at least 0.15 mass %; and
internal defects in the nugget per 100 mm of weld length of the nugget being equal to or less than three in number.

[8] A quenched member including the weld joint of [7].

(1) A weld joint manufacturing method including:

a first process of sandwiching an aluminum-plated steel sheet provided with an aluminum plating layer on at least one face between a pair of wheel electrodes and rotating the pair of wheel electrodes in a circumferential direction so as to pass current through the aluminum-plated steel sheet while moving the pair of wheel electrodes over the aluminum-plated steel sheet; and
a second process of, in an overlapped state of the aluminum plating layer with another steel sheet (which may be a different aluminum-plated steel sheet), welding a part of the aluminum-plated steel sheet through which current was passed during the first process to the other steel sheet.

Advantageous Effects

In the first process, the aluminum-plated steel sheet provided with an aluminum plating layer on at least one face is sandwiched between a pair of wheel electrodes, then the wheel electrodes are rotated in a circumferential direction so as to pass current through the aluminum-plated steel sheet while moving the pair of wheel electrodes over the aluminum-plated steel sheet. As a result, part of the aluminum plating layer is removed at parts of the aluminum-plated steel sheet through which current has passed. Then in the second process welding is performed in an overlapped state of the parts where part of the aluminum plating layer has been removed with the other steel sheet. As a result, the aluminum content of the weld portion at the weld joint obtained by welding of the second process is lower than would be the case if welded without performing the first process.

Note that the first process may be performed by sandwiching only the aluminum-plated steel sheet between the pair of wheel electrodes and only adopting an overlapped state of the aluminum-plated steel sheet and the other steel sheet when the second process is performed, or an overlapped state of the aluminum-plated steel sheet and the other steel sheet may be adopted from a stage when the first process is performed.

(2) The weld joint manufacturing method of (1), wherein:

in the first process plural steel sheets including the aluminum-plated steel sheet are overlapped; and
in the second process the welding is performed by welding while the plural steel sheets are still overlapped without shifting from the first process.

(3) The weld joint manufacturing method of (2), wherein a nugget is not generated in the first process.
(4) The weld joint manufacturing method of any one of (1) to (3), wherein a type of the welding of the second process is seam welding.

(5) The weld joint manufacturing method of any one of (1) to (4), wherein a carbon content of steel in the aluminum-plated steel sheet is at least 0.15 mass %.

(6) A quenched member manufacturing method including quenching a weld portion of a weld joint manufactured by the weld joint manufacturing method of any one of (1) to (5).

(7) A weld joint including:

an aluminum-plated steel sheet provided with an aluminum plating layer on at least one face;
another steel sheet that is overlapped with the aluminum plating layer; and
a nugget that connects the aluminum-plated steel sheet and the other steel sheet together, wherein in the weld joint:

an aluminum content per unit area of the nugget as viewed along a direction perpendicular to the aluminum-plated steel sheet is less than 75% of an aluminum content per unit area of all aluminum plating layers present at a side at which faces of the respective steel sheets are superimposed on each other;
an aluminum content of the nugget is less than 1.0 mass %;
a carbon content of the nugget is at least 0.15 mass %; and
there are no more than three internal defects present inside the nugget per 100 mm of weld length of the nugget.

(8) A quenched member including the weld joint of any one of (7) to (10).

The weld joint manufacturing method according to the present disclosure enables a weld joint to be obtained that has a lower aluminum content in a weld portion when plural steel sheets including an aluminum-plated steel sheet are welded together.

BRIEF DESCRIPTION OF DRAWINGS

Fig. 1A is a diagram illustrating an example of a first process, specifically illustrating a first process performed one sheet at a time on an aluminum-plated steel sheet included in plural steel sheets configuring members for joining.
Fig. 1B is an enlarged view corresponding to Fig. 1A.
Fig. 2A is a diagram illustrating an example of a first process, specifically illustrating a first process performed in a superimposed state of two steel sheets including an aluminum-plated steel sheet.
Fig. 2B is an enlarged view corresponding to Fig. 2A.
Fig. 3A is a diagram illustrating a first process in a case in which mash seam welding is performed in a second process, specifically a first process performed one sheet at a time.
Fig. 3B is a diagram illustrating a first process in a case in which mash seam welding is performed in a second process, specifically illustrating a first process performed on two superimposed steel sheets.
Fig. 4A is a diagram illustrating a superimposed state of steel sheet edges prior to welding in a case in which mash seam welding is performed in a second process.
Fig. 4B is a diagram illustrating a pair of wheel electrodes together with a weld joint after mash seam welding has been performed in the second process.
Fig. 5A is a cross-section illustrating a weld joint in a case in which seam welding has been performed in a second process.
Fig. 5B is a diagram illustrating the weld joint illustrated in Fig. 5A as viewed along a direction perpendicular to an aluminum-plated steel sheet.

DESCRIPTION OF EMBODIMENTS

Explanation follows regarding an exemplary embodiment of the present disclosure.

Weld Joint Manufacturing Method

A weld joint manufacturing method of the present disclosure is a method for joining together plural steel sheets.

At least one steel sheet out of the "plural steel sheets" to be joined (members for joining) in the weld joint manufacturing method of the present disclosure is an aluminum-plated steel sheet.

For example, when joining two steel sheets together, one of the two steel sheets may be an aluminum-plated steel sheet and the other of the two steel sheets may be a steel sheet that is not an aluminum-plated steel sheet, or both of the steel sheets may be aluminum-plated steel sheets.

Aluminum-Plated Steel Sheet

An "aluminum-plated steel sheet" refers to a steel sheet provided with an aluminum plating layer on at least one face. Namely, an aluminum-plated steel sheet is a steel sheet provided with an aluminum plating layer on one face, or a steel sheet provided with an aluminum plating layer on both faces.

Note that reference simply to a "steel sheet" also encompasses aluminum-plated steel sheets.

Aluminum Plating Layer

Unless specifically stated otherwise, the aluminum plating layer refers to a plated coating layer having a ratio of aluminum in a plating layer at least 50 mass %. The aluminum plating layer may therefore be obtained using, for example, an aluminum-silicon alloy bath with 10% added silicon (Si) by mass (Al-10Si%). Of course, the ratio of aluminum in the plated coating layer may be 70 mass % or greater, may be 80 mass % or greater, or may be 90 mass % or greater.

Material to be Plated: Steel in aluminum-plated steel sheet.

There is no particular limitation to the carbon content of the steel configuring the material to be plated (the steel in the aluminum-plated steel sheet).

However, it is conceivable that the weld joint manufacturing method of the present disclosure is employed to produce tailored blanks for hot pressing. In such cases, the carbon content of the steel configuring the material to be plated preferably has, for example, at least 0.15 mass % in order to achieve high strength when the steel configuring the material to be plated is quenched in hot pressing.

Note that in the present disclosure, a "tailored blank" is a sheet shaped material configured by joining together plural steel sheets with different sheet thicknesses and different compositions by welding. Such tailored blanks are typically used in press processing.

First Process and Second Process

The weld joint manufacturing method of the present disclosure includes a first process and a second process performed after the first process. Explanation follows in sequence regarding the first process and the second process.

Explanation follows regarding a case in which two steel sheet are joined together. However, the present disclosure is not limited to such cases, and may also be applied in cases in which three or more steel sheet are joined together.

First Process

The first process is a process in which an aluminum-plated steel sheet provided with an aluminum plating layer on at least one face is sandwiched between a pair of wheel electrodes, and the wheel electrodes are rotated in a circumferential direction so as to pass current through the aluminum-plated steel sheet while the pair of wheel electrodes move over the aluminum-plated steel sheet.

In the first process, the aluminum in the plating layer is pushed out from directly below the wheel electrodes at the parts at which current passes through the aluminum-plated steel sheet. The aluminum plating layer is partially removed as a result.

Two methods are suggested for the first process.

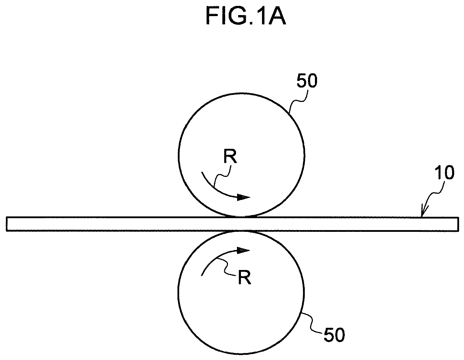

The first method, as illustrated in Fig. 1A, is a method in which a single aluminum-plated steel sheet 10 is sandwiched between a pair of wheel electrodes 50, and the wheel electrodes are rotated in a circumferential direction and current is passed through the aluminum-plated steel sheet as the pair of wheel electrodes move over the aluminum-plated steel sheet. In other words, this is a method in which part of the aluminum plating layers are removed one sheet at a time from aluminum-plated steel sheets 10 included in the two steel sheets configuring the members for joining.

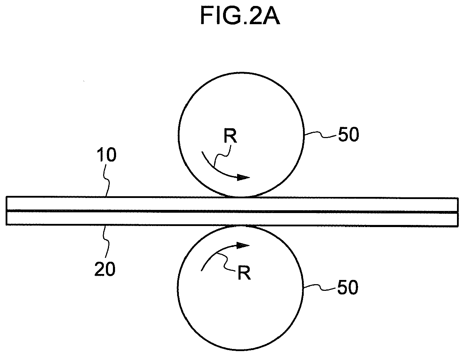

The second method, as illustrated in Fig. 2A, is a method performed in a superimposed state of two steel sheets 10, 20 configuring members for joining. In other words, this is a method in which the two steel sheets, including an aluminum-plated steel sheet, are superimposed and sandwiched between a pair of wheel electrodes and current is passed through the aluminum-plated steel sheets. This may also be applied to three or more steel sheets. It is sufficient that at least one of the steel sheets be an aluminum-plated steel sheet.

First Method: Method in which the first process is performed one sheet at a time, and operation thereof.

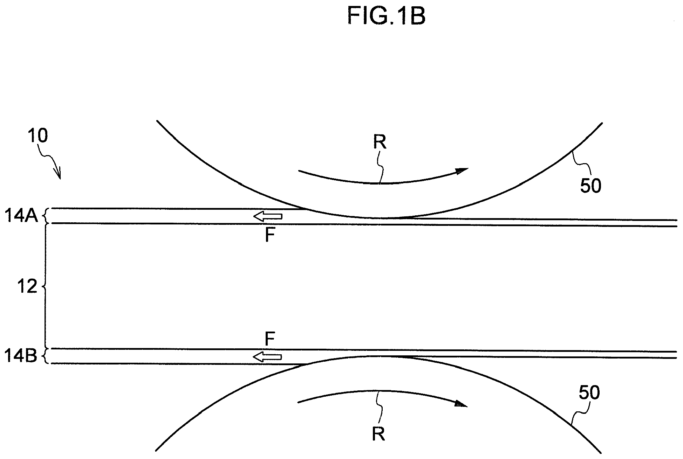

Fig. 1B is an enlarged view of a situation in the first method in which a single aluminum-plated steel sheet 10 is sandwiched between a pair of wheel electrodes and current passed therethrough. The aluminum-plated steel sheet 10 illustrated in Fig. 1B is an aluminum-plated steel sheet 10 provided with respective aluminum plating layers 14A, 14B on each of the two faces thereof.

As illustrated in Fig. 1B, the wheel electrodes 50 move so as to rotate in the arrow R direction. The pressure and current applied by the wheel electrodes 50 ejects the aluminum plating layers 14A, 14B forward in the direction of progress (the arrow F direction in Fig. 1B, the direction of progress of the pair of wheel electrodes 50 with respect to the steel sheet) and toward the sides relative to the direction of progress. Part of the aluminum plating layers 14A, 14B is accordingly removed at parts of the aluminum-plated steel sheet 10 subjected to the first process (namely, the parts where the wheel electrodes pass and through which current passes).

Note that even in cases in which the first process is performed on an aluminum-plated steel sheet with an aluminum plating layer provided on a single face only, part of the aluminum plating layer is removed at the parts through which current is passed during the first process.

In cases in which both of the two steel sheets configuring members for joining are aluminum-plated steel sheets, the first process is preferably performed on each of the aluminum-plated steel sheets. However, some advantageous effect can still be achieved even if the first process is only performed on one of the aluminum-plated steel sheets.

In cases in which only one out of the two steel sheets is an aluminum-plated steel sheet the first process may be performed on the aluminum-plated steel sheet alone.

Second Method: Method in which the first process is performed on two superimposed sheets, and operation thereof.

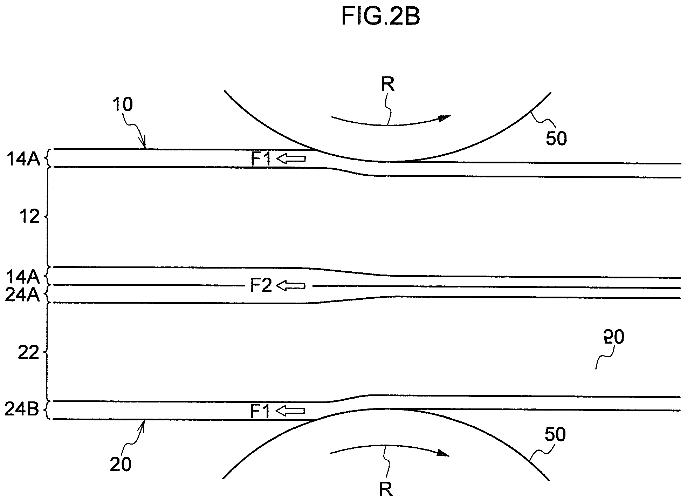

Fig. 2B illustrates the second method. The two aluminum-plated steel sheets 10, 20 are superimposed on each other. The two superimposed aluminum-plated steel sheets 10, 20 are sandwiched between the pair of wheel electrodes 50. The wheel electrodes are rotated in a circumferential direction and current is passed through the sheets as the pair of wheel electrodes moves over the aluminum-plated steel sheet. Note that both of the two aluminum-plated steel sheets 10, 20 are provided with aluminum plating layers on both faces.

As illustrated by arrows F1 in Fig. 2B, aluminum plating layers 14A, 24B present at portions of the respective aluminum plating layers that contact the pair of wheel electrodes 50 are ejected toward the front in the direction of progress of the wheel electrodes and toward the sides relative to the direction of progress, similarly to when the first process is performed to the single aluminum-plated steel sheet 10 as described above. Moreover additionally, as illustrated by the arrow F2 in Fig. 2B, the aluminum plating layers 14B, 24A present at portions of the aluminum plating layers that do not contact the pair of wheel electrodes 50 (namely, the aluminum plating layers 14B, 24A present on the mutually superimposed faces of the aluminum-plated steel sheets 10, 20) are also pushed toward the front and sides relative to the direction of progress by pressing force from the pair of wheel electrodes 50.

Part of Current Passing

The part of the aluminum-plated steel sheets through which current is passed in the first process (referred to hereafter simply as "current-passing part") is not particularly limited. However, the part of the aluminum-plated steel sheets through which current is passed in the first process is a part of welding in the second process.

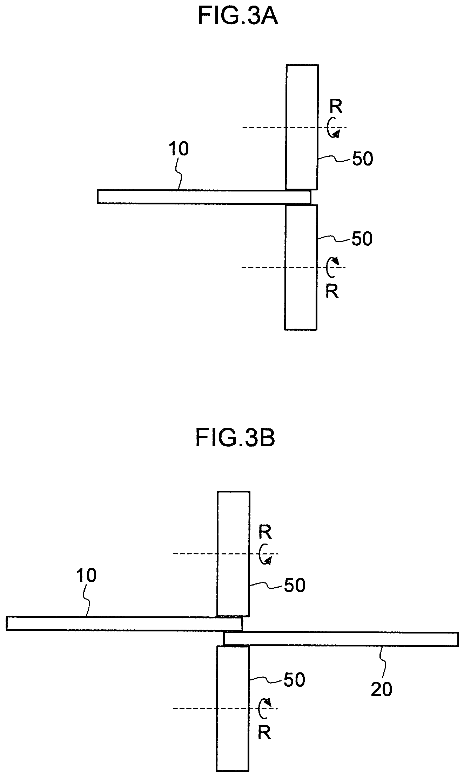

For example, in cases in which mash seam welding is performed in the second process, as illustrated in Fig. 3A and Fig. 3B, the current-passing part in the first process is at an edge of the steel sheet. Fig. 3A illustrates state in which the first process is performed on a single aluminum-plated steel sheet 10, and Fig. 3B illustrates a state in which the first process is performed on two superimposed aluminum-plated steel sheets 10, 20.

Wheel Electrodes: Electrode End Face Profiles

The profile of faces of the wheel electrodes contacting the welding targets in the first process is not particularly limited, and a beveled profile or a rounded profile may be employed therefor.

In the case of a rounded profile, the radius of curvature at the leading ends of the electrodes in not particularly limited, and may, for example, be approximately 8 mm.

The method used to drive the wheel electrodes is not particularly limited, and the wheel electrodes may be directly driven by a motor, or the wheel electrodes may be driven directly by the workpiece. Examples given of direct drive methods for the wheel electrodes include directly driving the electrode shafts, and using a knurled drive to drive the periphery of the wheel electrodes.

Although the electrode material is not particularly limited, a copper alloy is preferable. Examples of such copper alloys include Cr-Cu and Be-Cu.

Current Passing Method

The current passing method in the first process is not particularly limited. The power source employed may be a DC power source, or may be an AC power source. Although the explanation of the present exemplary embodiment uses an example based on an AC power source being employed to intermittently pass current, current may be passed continuously.

Conditions: Current Value, Pressing Force, Speed

The current value, pressing force, and speed conditions in the first process are not particularly limited.
The current value refers to the current value set for a welding device.
The pressing force refers to the pressing force applied to the workpiece (steel sheet) by the pair of wheel electrodes (wheel electrode pair).
The speed refers to the speed the pair of wheel electrodes are moved along a path relative to the steel sheet.
In cases in which the first process is performed on plural steel sheets in a superimposed state (namely in cases in which the second method of the first process is employed: see Fig. 2A, Fig. 2B, and Fig. 3B), it is preferable that no nugget is generated to bond the plural steel sheets together in the first process. Namely, the conditions, such as the current value, pressing force, and speed are preferable set so as not to generate such a nugget. This approach is adopted since were a nugget to be generated in the first process, the aluminum in the aluminum plating layer might penetrate the nugget before the aluminum plating layer had been ejected and removed. This might result in not being able to lower the aluminum content of the nugget sufficiently.
However, the present disclosure also encompasses configurations in which a nugget is generated in the first process. This is since not all of the aluminum in the aluminum plating layer is incorporated into the nugget and some of the aluminum in the aluminum plating layer is ejected.
Control may be performed to prevent nugget generation in the first process by adjusting the current value, pressing force, speed conditions, or the like. In general, the respective conditions exhibit the following trends.
The higher the current value the more readily a nugget forms, and the lower the current value the less readily a nugget forms.
The higher the pressing force the less readily a nugget forms, and the lower the pressing force the more readily a nugget forms.
The higher the speed the less readily a nugget forms, and the lower the speed the more readily a nugget forms.

Second Process

The second process is a process to weld the part, through which current was passed through the aluminum-plated steel sheet in the first process, to another steel sheet, while in a state in which the aluminum plating layer and the other steel sheet are overlapped.
Due to part of the aluminum plating layer of the aluminum-plated steel sheet having been removed from the part through which current was passed in the first process, a weld portion with a low aluminum content can be formed in the second process. A low aluminum content refers to an aluminum content that is lower than it would be at the weld portion if welded without removing the aluminum plating layer.

Welding Types

The welding type employed in the second process is not particularly limited, and various welding types such as, for example, seam welding (lap seam welding, mash seam welding), resistance spot welding, laser welding, arc welding, or plasma welding may be employed therefor.
This is due to part of the aluminum plating layer being removed at the parts through which current is passed in the first process, the aluminum content within the weld portion can be reduced in comparison to cases in which the first process was not performed irrespective of the welding type employed in the second process. Namely, some advantageous effect can still be achieved irrespective of the type of welding employed in the second process.
Note that the "weld portion" of the present disclosure refers to a portion that has been melted during welding and subsequently solidified. For example, this corresponds to the nugget in resistance welding. This also corresponds to the bead in laser welding, arc welding, and plasma welding.
In cases in which seam welding is the type of welding in the second process, the aluminum with the potential to be incorporated into the weld portion (nugget) is only the aluminum contained in aluminum plating layers present on the face on the side where the steel sheets are superimposed on each other. Namely, aluminum in the aluminum plating layers present on the faces on the sides that contact the pair of wheel electrodes is not incorporated into the nugget.

The aluminum content of the weld portion (nugget) can accordingly be even better suppressed in comparison to welding that penetrates the other aluminum-plated steel sheet (for example laser welding).

Definitions of Welding Types

Seam welding refers to resistance welding performed by employing disc electrodes (roller electrodes, wheel electrodes) to press against and pass current through a base material, and is performed continuously along a joint while rotating the electrodes (JIS Z 3001-6: 2013).

Lap seam welding refers to seam welding applied to a superimposed joint (JIS Z 3001-6: 2013).

Mash seam welding refers to a method in which an overlap is formed at a width from the sheet edge of from half the sheet thickness to approximately twice the sheet thickness, and disc electrodes are employed similarly to in lap seam welding to press against and pass current through to perform continuous welding while squashing the weld joint (JIS Z 3001-6: 2013).

Wheel Electrodes

In cases in which seam welding is the welding type employed in the second process, the pair of wheel electrodes in the second process may employ the pair of wheel electrodes as employed in the first process without modification, or may employ different wheel electrodes to the pair of wheel electrodes employed in the first process.

Current Passing Method

In cases in which seam welding is the welding type employed in the second process, the current passing method is, similarly to in the first process, not particularly limited. The current passing method of the second process may be the same current passing method as that of the first process, or may be a different current passing method.

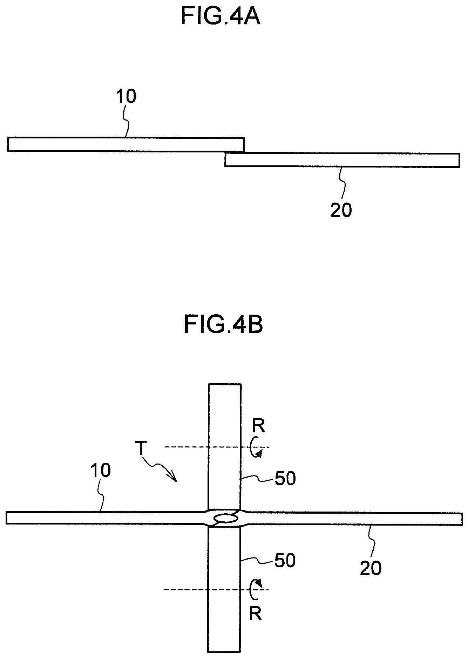

The weld joint manufacturing method of the present disclosure is well-suited for application to tailored blank manufacture. When manufacturing tailored blanks, the type of welding employed in the second process is, for example, mash seam welding, as illustrated in Fig. 4A and Fig. 4B. Fig. 4A illustrates a state in which the edges of steel sheets have been overlapped prior to welding in a case in which mash seam welding is employed in the second process. Fig. 4B illustrates a weld joint, together with the pair of wheel electrodes, after performing mash seam welding in the second process.

Weld Joint

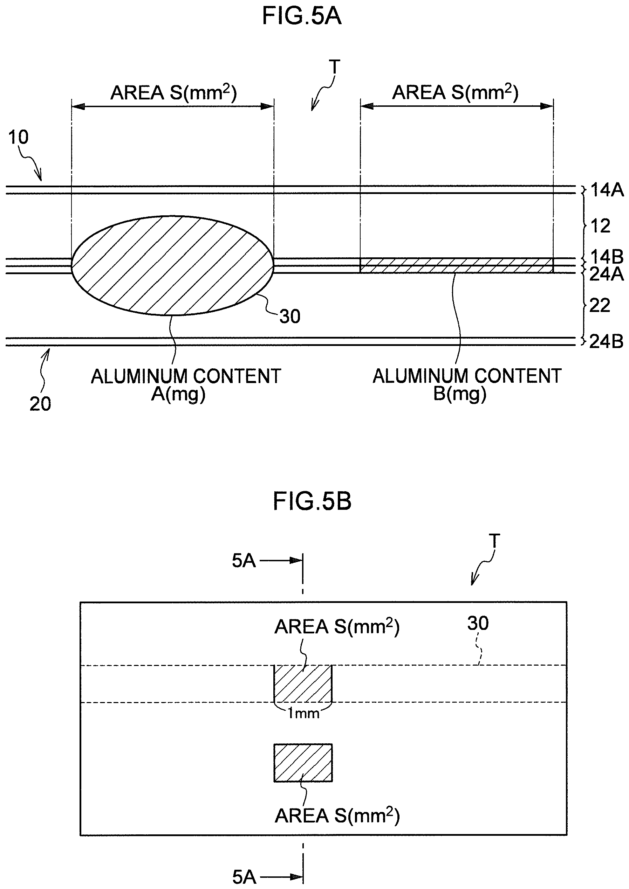

Fig. 5A illustrates a weld joint T manufactured using the weld joint manufacturing method according to an exemplary embodiment of the present disclosure. Specifically, a cross-section of the weld joint T sectioned perpendicularly to the seam weld line is illustrated for a case in which seam welding (lap seam welding) is the welding type employed in the second process.

As illustrated in Fig. 5A, a nugget 30 bonding the aluminum-plated steel sheet 10 and the aluminum-plated steel sheet 20 together is formed at the weld joint T. In other words, the aluminum-plated steel sheet 10 and aluminum-plated steel sheet 20 are overlapped and connected together by the nugget 30.

In the weld joint manufacturing method of the present exemplary embodiment, parts of the aluminum plating layers of the aluminum-plated steel sheets 10, 20 are removed in the first process. In the second process, the parts from which part of the aluminum plating layer has been removed are superimposed on the other steel sheet and seam welded. The nugget is obtained at the seam welded part.

Due to part of the aluminum plating layer having been removed, the aluminum content of the nugget 30 is lower at the weld joint T than the aluminum content would be in a hypothetical case in which all of the aluminum in the aluminum plating layers present at the superimposed face side were to be incorporated into the nugget 30.

In other words, when viewed along a direction perpendicular to the aluminum-plated steel sheet faces, the aluminum content of the nugget 30 per unit area is lower than the aluminum content per unit area of the aluminum plating layers present at the superimposed face side.

Put yet another way, the aluminum content per unit length inside the nugget is lower than the aluminum content of the aluminum plating layers present in a region having an area of the unit length of the superimposed faces multiplied by an equivalent width to that of the nugget (an area of a region when the unit length of the nugget is viewed along a direction perpendicular to the faces of the aluminum-plated steel sheets).

Further explanation follows regarding this point, with reference to Fig. 5A and Fig. 5B.

As illustrated in Fig. 5A and Fig. 5B when, as viewed along a direction perpendicular to the faces of the aluminum-plated steel sheets 10, 20, the aluminum content included in the nugget 30 (nugget unit length) for an area S (mm$^2$) is

denoted A (mg), and the aluminum content of the aluminum plating layers 14B, 24A present at the side of the mutually superimposed faces of the steel sheets 10, 20 for the same area S (mm$^2$) is denoted B (g), then the following statement is satisfied:

$$A/S \ (\mathrm{mg/mm}^2) < B/S \ (\mathrm{mg/mm}^2)$$

Moreover, voids (internal defects) inside the nugget reduce the joint strength. The presence or absence of voids is determined by X-ray inspection. Internal defects having a size of less than 100 $\mu$m diameter are determined to have no negative impact on the joint strength, while voids of 100 $\mu$m diameter or greater are considered to be internal defects.

Measurement Method

The aluminum content A and the aluminum content B are measured using an Electron Probe Micro Analyzer (EPMA).
Specifically, the sheet (component) is sectioned to enable the aluminum content (mass %) in the plated portions and the weld portion (nugget) to be measured (verified) by measuring from the cross-section direction using an energy dispersive X-ray analyzer (EDAX) or an Electron Probe Micro Analyzer (EPMA).
According to the weld joint manufacturing method of the present disclosure, as viewed along a direction perpendicular to the faces of the aluminum-plated steel sheets, the aluminum content per unit area of the nugget 30 may be less than 75% of the aluminum content per unit area of the aluminum plating layers present at the side of the superimposed faces.
Note that this point is also confirmed in the Examples described below.

Quenching Process

Quenching may be performed after the plural steel sheets have been joined using the weld joint manufacturing method of the present disclosure. In such cases, the aluminum content of the nugget 30 needs to be less than 1.0 mass % in order to perform quenching that includes quenching the nugget 30. This is because hard martensite becomes difficult to obtain by quenching when the aluminum content inside the nugget exceeds 1.0 mass %. This would result in a difference in strength between softer portions and the vicinity thereof, reducing the joint strength. Regarding this point, the weld joint manufacturing method of the present disclosure facilitates achieving an aluminum content of the nugget 30 of less than 1.0 mass %.
The quenching method is not particularly limited.
For example, a tailored blank may be manufactured using the weld joint manufacturing method of the present disclosure, and this tailored blank then hot pressed (hot stamped) to quench the weld portion. In hot pressing, the tailored blank is initially heated to approximately 900°C, for example, so as to be converted to austenite. Next, the austenite-converted tailored blank is press formed. This is a forming method in which press forming and quenching are performed at the same time. A cooling effect accompanying contact with the mold (contact cooling) enables shaping to be performed as quenching by martensite transformation is occurring.

Examples

Lastly, more specific explanation of the present invention is given using Examples.
Note that the present invention is not limited to the following Examples. It would be obvious to a practitioner skilled in the art that various alterations and modifications may be envisaged within the scope of the concepts recited in the Patent Claims, and it is obviously understood that such alterations and modifications also fall within the technical scope of the present invention.

Workpiece

The aluminum-plated steel sheets listed in Table 1 were employed as workpieces (steel sheets).

Table 1

| | Sheet thickness | Plating weight per single face | Steel sheet composition (mass %) | | | | |
|---|---|---|---|---|---|---|---|
| | mm | (g/m$^2$) | C | Si | Mn | P | S |
| Nos. 1 - 3, No. 7 | 1.6 | 40 | 0.2 | 0.21 | 1.36 | 0.001 | ≥ 0.0001 |
| Nos. 4 - 6, No. 8 | 1.6 | 80 | 0.2 | 0.21 | 1.36 | 0.001 | ≥ 0.0001 |
| No. 9 | 1.2 | 40 | 0.2 | 0.21 | 1.36 | 0.001 | ≥ 0.0001 |
| No. 10 | 1.2 | 80 | 0.2 | 0.21 | 1.36 | 0.001 | ≥ 0.0001 |

Test conditions are listed in Table 2

Table 2

| No. | Plating weight (g/m²) | Welding method | Overlap amount mm | First process Speed m/min | First process Current value kA | First process Pressing force kgf | Second process Speed m/min | Second process Current value kA | Second process Pressing force kgf | |
|---|---|---|---|---|---|---|---|---|---|---|
| 1 | 40 | Mash seam welding | 1.5 | 6 | 20 | 1500 | 2 | 16 | 1500 | Example |
| 2 | 40 | Mash seam welding | 1.5 | 6 | 20 | 1500 | 2 | 18 | 1500 | Example |
| 3 | 40 | Mash seam welding | 1.5 | 6 | 20 | 1500 | 2 | 20 | 1500 | Example |
| 4 | 80 | Mash seam welding | 1.5 | 6 | 20 | 1500 | 2 | 16 | 1500 | Example |
| 5 | 80 | Mash seam welding | 1.5 | 6 | 20 | 1500 | 2 | 18 | 1500 | Example |
| 6 | 80 | Mash seam welding | 1.5 | 6 | 20 | 1500 | 2 | 20 | 1500 | Example |
| 7 | 40 | Mash seam welding | 1.5 | - | - | - | 2 | 22 | 1500 | Comparative example |
| 8 | 80 | Mash seam welding | 1.5 | - | - | - | 2 | 22 | 1500 | Comparative example |
| | | Welding method | Joint profile | Speed m/min | | | | Focused light diameter mm | Output kW | |
| 9 | 40 | Laser welding | Butt | 3 | - | - | | 0.6 | 3 | Comparative example |
| 10 | 80 | Laser welding | Butt | 3 | - | - | | 0.6 | 3 | Comparative example |

The first process and the second process were performed in the cases of Nos. 1 to 6. The welding method (welding type) in the second process was mash seam welding, and the first process was performed using the second method described above, namely with two sheets of the aluminum-plated steel sheets listed in Table 1 processed in an overlapped state.

Welding was performed by mash seam welding for Nos. 7 and 8 without having performed the first process.

Welding was performed by laser welding for Nos. 9 and 10 without having performed the first process.

Welding was performed under the conditions listed in Table 2, and the weld joints obtained were maintained at 900°C for 4 minutes using an electric furnace under atmospheric conditions, before then quenching at a quenching start temperature of 750°C. The results of these investigations are listed in Table 3.

Table 3

| No. | Number of internal defects | A1 content of A1 plating layers present at side of superimposed faces | Nugget A1 content | Incorporated ratio | Average A1 concentration at weld portion | Average C concentration at weld portion | Weld portion hardness | Tensile strength | |
|---|---|---|---|---|---|---|---|---|---|
| | Quantity | g | g | % | mass% | mass% | HV | kN | |
| 1 | 0 | 0.000072 | 0.000037 | 51 | 0.11 | 0.20 | 460 | 45.6 | Example |
| 2 | 1 | 0.000081 | 0.000040 | 49 | 0.12 | 0.19 | 462 | 45.7 | Example |
| 3 | 0 | 0.000085 | 0.000042 | 49 | 0.12 | 0.21 | 465 | 47.0 | Example |
| 4 | 0 | 0.000144 | 0.000038 | 26 | 0.12 | 0.20 | 450 | 44.6 | Example |
| 5 | 1 | 0.000162 | 0.000041 | 25 | 0.12 | 0.19 | 455 | 45.1 | Example |
| 6 | 2 | 0.000170 | 0.000043 | 25 | 0.12 | 0.19 | 460 | 45.2 | Example |
| 7 | 13 | 0.000100 | 0.000060 | 60 | 0.18 | 0.21 | 420 | 31.3 | Comparative Example |
| 8 | 15 | 0.000170 | 0.000120 | 71 | 0.37 | 0.20 | 400 | 27.7 | Comparative Example |
| | Number of internal defects | A1 content originally present at weld portion faces | A1 content incorporated in weld portion | Incorporated ratio | Average A1 concentration at weld portion | Average C concentration at weld portion | Weld portion hardness | Tensile strength | |
| | Quantity | g | g | % | mass% | mass% | HV | kN | |
| 9 | 0 | 0.000072 | 0.000067 | 93 | 1.2 | 0.19 | 300 | 28.8 | Comparative Example |
| 10 | 0 | 0.000144 | 0.000122 | 85 | 2.2 | 0.21 | 250 | 25.2 | Comparative Example |

14

The number of internal defects was observed using X-ray photography to find the number in the central 100 mm of a 180 m long seam weld portion.

The aluminum content was measured using the method described above (the method employing an electron probe micro analyzer).

The incorporated ratio relates to the nugget and the aluminum plating layers present at the same area when viewed along a direction perpendicular to the faces of the aluminum-plated steel sheet, and refers to a ratio of the aluminum content of the nugget to the aluminum content of the aluminum plating layers present at the side of the superimposed faces.

The weld portion hardness was found by employing Vickers hardness testing in which the weld portion hardness was measured at five points using a test load of 1 kgf and the average value thereof was found using arithmetic averaging.

The tensile strength was measured for a tensile testing sample having a width of 20 mm by tensile testing at a tensioning speed of 10 mm/min and with an inter-chuck distance of 100 mm.

As illustrated by Table 3, Nos. 1 to 6, corresponding to Examples, each had three internal defects or fewer. The incorporated ratio was below 75% (and moreover below 55%) in each case. The aluminum concentration inside the weld portion was below 1.0 mass % (and moreover below 0.15 % mass) in each case.

By contrast thereto, in Nos. 7 and 8, corresponding to Comparative Examples, a larger number of internal defects arose in the nuggets, and the joint strength was significantly lower than in Nos. 1 to 6. Employing mash seam welding as the welding method enabled the amount of aluminum incorporated into the weld portion to be suppressed to lower than that when laser welding was employed. However, it is apparent that internal defects inside the weld portion become more numerous when the first process is not performed, leading to a reduction in the joint strength.

In the cases of Nos. 9 and 10, corresponding to Comparative Examples, in which laser welding was employed as the welding method without performing the first process, the aluminum concentration in the weld portions was a value exceeding 1.0 mass %, and the joint strength was significantly lower than in Nos. 1 to 6.

10      aluminum-plated steel sheet
14A     aluminum plating layer
14B     aluminum plating layer
20      aluminum-plated steel sheet (other steel sheet)
30      nugget (weld portion)
50      pair of wheel electrodes
T       weld joint

The disclosure of Japanese Patent Application No. 2017-067989, filed on March 30, 2017, is incorporated into the present disclosure in its entirety by reference.

All cited documents, patent applications, and technical standards mentioned in the present disclosure are incorporated by reference in the present disclosure to the same extent as if each individual cited document, patent application, or technical standard was specifically and individually indicated to be incorporated by reference.

Although explanation has been given regarding various typical exemplary embodiments and examples, the present invention is not limited to such exemplary embodiments and examples.

**Claims**

1. A weld joint manufacturing method comprising:

    performing current-passing through an aluminum-plated steel sheet provided with an aluminum plating layer while moving a pair of wheel electrodes relative to the aluminum-plated steel sheet by sandwiching the aluminum-plated steel sheet between the pair of wheel electrodes and rotating the pair of wheel electrodes in a circumferential direction; and
    welding a part of the aluminum-plated steel sheet, where the current-passing has been performed, and another steel sheet, in an overlapped state of the aluminum plating layer with the other steel sheet.

2. The weld joint manufacturing method of claim 1, wherein:

    the current-passing is performed in an overlapped state of a plurality of steel sheets including the aluminum-plated steel sheet and the other steel sheet; and
    the welding is performed by welding while retaining the overlapped state of the plurality of steel sheets without shifting from the overlapped state during the current-passing.

**3.** The weld joint manufacturing method of claim 2, wherein a nugget is not generated during the current-passing.

**4.** The weld joint manufacturing method of any one of claim 1 to claim 3, wherein the welding comprises seam welding.

**5.** The weld joint manufacturing method of any one of claim 1 to claim 4, wherein a carbon content of steel in the aluminum-plated steel sheet is at least 0.15 mass %.

**6.** A quenched member manufacturing method comprising quenching a weld portion of a weld joint manufactured by the weld joint manufacturing method of any one of claim 1 to claim 5.

**7.** A weld joint, comprising:

an aluminum-plated steel sheet provided with an aluminum plating layer;
another steel sheet that is overlapped with the aluminum plating layer; and
a nugget connecting the aluminum-plated steel sheet and the other steel sheet together,
an aluminum content per unit area of the nugget as viewed along a direction perpendicular to the aluminum-plated steel sheet being less than 75% of an aluminum content per unit area of all the aluminum plating layers on a side at which faces of the aluminum-plated steel sheet and the other steel sheet are superimposed;
an aluminum content of the nugget being less than 1.0 mass %;
a carbon content of the nugget being at least 0.15 mass %; and
internal defects in the nugget per 100 mm of weld length of the nugget being equal to or less than three in number.

**8.** A quenched member, comprising the weld joint of claim 7.

# FIG.1A

50

R

10

R

50

## FIG.1B

EP 3 603 869 A1

# FIG.2A

## FIG.2B

FIG.3A

FIG.3B

# FIG.4A

10

20

# FIG.4B

T

R

10

50

50

20

R

## FIG.5A

AREA S(mm²)

AREA S(mm²)

T

10

14A

12

14B

24A

22

24B

30

20

ALUMINUM CONTENT
A(mg)

ALUMINUM CONTENT
B(mg)

## FIG.5B

T

5A

AREA S(mm²)

30

1mm

AREA S(mm²)

5A

## INTERNATIONAL SEARCH REPORT

| | International application No. |
|---|---|
| | PCT/JP2018/011166 |

A. CLASSIFICATION OF SUBJECT MATTER
Int. Cl. B23K11/16(2006.01)i, B23K11/06(2006.01)i, B23K11/34(2006.01)i,
B23K31/00(2006.01)i

According to International Patent Classification (IPC) or to both national classification and IPC

B. FIELDS SEARCHED

Minimum documentation searched (classification system followed by classification symbols)
Int. Cl. B23K11/16, B23K11/06, B23K11/34, B23K31/00

Documentation searched other than minimum documentation to the extent that such documents are included in the fields searched
Published examined utility model applications of Japan     1922-1996
Published unexamined utility model applications of Japan   1971-2018
Registered utility model specifications of Japan           1996-2018
Published registered utility model applications of Japan   1994-2018

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2013-81997 A (JFE STEEL CORP.) 09 May 2013, paragraphs [0018], [0021]-[0052], fig. 1-5 (Family: none) | 1-8 |
| Y | JP 62-252687 A (NISSHIN STEEL CO., LTD.) 04 November 1987, page 1, right column, line 1 to page 2, upper left column, sixth line from the bottom, fig. 2 (Family: none) | 1-8 |
| Y | JP 2013-220445 A (NIPPON STEEL & SUMITOMO METAL CORP.) 28 October 2013, paragraphs [0049], [0050] & US 2015/0043962 A1, paragraphs [0093]-[0095] & WO 2013/147035 A1 & EP 2832887 A1 & CN 104204257 A & KR 10-2014-0131557 A | 5-8 |

☒ Further documents are listed in the continuation of Box C.   ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 25.05.2018 | 05.06.2018 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2018/011166

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2007-314817 A (SUMITOMO METAL INDUSTRIES, LTD.) 06 December 2007, paragraphs [0064], [0065], [0084], [0086] (Family: none) | 5-8 |

Form PCT/ISA/210 (continuation of second sheet) (January 2015)

**EP 3 603 869 A1**

**Patent documents cited in the description**

- JP 2002144066 A
- JP 2017067989 A